# FASCICULE DE BREVET EUROPEEN

(11) **EP 3 549 217 B1**
(45) Date de publication et mention de la délivrance du brevet: **20.05.2026**
(21) Numéro de dépôt: 17816958.7
(22) Date de dépôt: 30.11.2017
(51) Int. Cl.: H02G 3/14

(54) **PLAQUE D'HABILLAGE, APPAREILLAGE ÉLECTRIQUE COMPRENANT UNE TELLE PLAQUE D'HABILLAGE ET PROCÉDÉ DE FABRICATION D'UNE PLAQUE D'HABILLAGE**
VERKLEIDUNGSPLATTE, ELEKTRISCHE VORRICHTUNG MIT SOLCH EINER VERKLEIDUNGSPLATTE UND VERFAHREN ZUR HERSTELLUNG EINER VERKLEIDUNGSPLATTE
TRIM PLATE, ELECTRICAL APPARATUS COMPRISING SUCH A TRIM PLATE AND PROCESS FOR MANUFACTURING A TRIM PLATE

(30) Priorité: 02.12.2016 FR 1661892
(43) Date de publication de la demande: 09.10.2019
(73) Titulaire: Legrand France, 87000 Limoges (FR); Legrand SNC, 87000 Limoges (FR)
(72) Inventeur: MOURGAUD, Jean-François, 87220 Feytiat (FR); CHAMPAGNE, Thierry, 87240 Ambazac (FR)
(74) Mandataire: Jacobacci & Partners France
(86) Numéro de dépôt international: PCT/FR2017/053329
(87) Numéro de publication internationale: WO 2018/100317

(56) Documents cités:
- EP-A1- 2 148 345
- EP-A1- 2 325 963
- FR-B1- 2 861 885
- US-A- 4 565 023
- US-A- 5 675 125
- US-A1- 2010 155 100
- US-A1- 2014 003 005
- US-A1- 2016 311 193
- US-B1- 6 170 958

## Description

### DOMAINE TECHNIQUE AUQUEL SE RAPPORTE L'INVENTION

La présente invention concerne de manière générale les appareillages électriques.

Elle concerne plus particulièrement une plaque d'habillage ou de finition pour un appareillage électrique, un appareillage électrique comprenant une telle plaque d'habillage ainsi qu'un procédé de fabrication d'une telle plaque d'habillage.

### ARRIERE-PLAN TECHNOLOGIQUE

Classiquement, un appareillage électrique comporte :
- un mécanisme électrique qui confère à l'appareillage une fonction (interrupteur, prise de courant, *etc*.) ;
- un support d'appareillage (généralement en forme de cadre) qui est prévu pour porter le mécanisme et pour se fixer à une boîte électrique ; et
- une plaque d'habillage ou de finition qui est prévue pour recouvrir esthétiquement le support d'appareillage et qui présente généralement un passage ou une ouverture donnant accès à la partie fonctionnelle du mécanisme électrique.

La plaque d'habillage protège le support d'appareillage tout en débordant du contour externe de celui-ci, et elle entoure au plus près la partie fonctionnelle du mécanisme électrique ou un enjoliveur attaché audit mécanisme (enjoliveur qui entoure lui-même ladite partie fonctionnelle) de sorte que ladite plaque d'habillage interdit à un utilisateur d'accéder aux éléments électriques du mécanisme électrique alimentés en courant. La plaque d'habillage constitue ainsi un élément extérieur susceptible de subir des dégradations (salissures, rayures, *etc*.).

Les documents EP2325963A1, US5675125A et US2010/155100A1 décrivent des plaques d'habillage dans lesquelles une plaque arrière est visible à travers une pièce ajourée. Le document US4565023A divulgue un dispositif et un procédé selon les préambules des revendications 1 et 5.

### OBJET DE L'INVENTION

Dans ce contexte, la présente invention propose une plaque d'habillage selon la revendication 1.

La pièce ajourée permet ainsi une protection de la plaque arrière, tout en laissant la plaque arrière partiellement visible à travers l'ouverture ou les ouvertures. La pièce ajourée peut en outre participer à la définition de l'aspect esthétique de l'ensemble de la plaque d'habillage.

D'autres caractéristiques non limitatives et avantageuses de la plaque d'habillage conforme à l'invention sont les suivantes :
- la pièce ajourée est par exemple une grille métallique ;
- la grille présente un motif grillagé périodique ;
- la pièce ajourée présente au moins cent ouvertures (au travers de chacune desquelles la plaque est visible) réparties sur l'ensemble de la surface de la pièce ajourée ;
- la plaque arrière présente (par exemple au niveau de sa face arrière) des moyens de fixation de la plaque d'habillage sur l'appareillage électrique, par exemple des moyens de fixation sur un mécanisme d'appareillage de l'appareillage électrique ou des moyens de fixation sur un support d'appareillage de l'appareillage électrique.

L'invention propose également un appareillage électrique comprenant une telle plaque d'habillage. La partie fonctionnelle susmentionnée est par exemple un doigt de commande (tel qu'un doigt de commande d'un mécanisme d'appareillage équipant l'appareillage électrique), ce doigt de commande s'étendant dans ledit passage.

L'invention propose enfin un procédé de fabrication d'une plaque d'habillage selon la revendication 5.

L'étape de fabrication de la pièce ajourée peut comprendre une sous-étape de dépôt d'un masque partiel sur une plaque métallique et une sous-étape d'immersion de la plaque métallique dans un bain d'acide.

Selon une autre possibilité, l'étape de fabrication de la pièce ajourée peut comprendre une sous-étape de dépôt d'un masque partiel sur un plateau support et une sous-étape d'immersion du plateau support dans un bain électrolytique.

Par ailleurs, l'étape d'assemblage peut comprendre une sous-étape de dépôt d'un vernis sur une partie au moins de la plaque d'habillage et une sous-étape de cuisson du vernis.

Cette sous-étape de dépôt du vernis peut être réalisée avant ou après mise en contact de la plaque arrière et de la pièce ajourée.

Selon d'autres possibilités, l'étape de fabrication de la pièce ajourée peut comprendre une sous-étape de découpe, par exemple par frappe, par laser ou au jet d'eau.

### DESCRIPTION DETAILLEE D'EXEMPLES DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un appareillage électrique avec une plaque d'habillage selon un mode de réalisation de l'invention ;
- la figure 2 est une vue de détail, en coupe, de la plaque d'habillage de l'appareillage électrique de la figure 1 ;
- la figure 3 est une vue en éclaté de cette plaque d'habillage ;
- la figure 4 est une vue en éclaté d'une plaque d'habillage selon un mode de réalisation non couvert par les revendications, mais utile à la compréhension de l'invention ;
- la figure 5 est une vue en éclaté d'une plaque d'habillage selon un autre mode de réalisation de l'invention ;
- la figure 6 est une vue arrière de la plaque d'habillage de la figure 5 ;
- la figure 7 est une vue en éclaté d'un appareillage électrique comprenant la plaque d'habillage de la figure 5 ;
- la figure 8 est une vue de face d'un tel appareillage électrique ;
- la figure 9 est une vue selon la coupe A-A définie sur la figure 8 ;
- la figure 10 est une vue en éclaté d'un appareillage électrique avec une plaque d'habillage selon un mode de réalisation non couvert par les revendications, mais utile à la compréhension de l'invention ;
- la figure 11 est une vue arrière de la plaque d'habillage de la figure 10 ;
- la figure 12 est une vue de face de l'appareillage électrique de la figure 10 ; et
- la figure 13 est une vue selon la coupe B-B définie sur la figure 12.

Dans la présente description, les termes "*avant*" et *"arrière"* seront utilisés par rapport à la direction du regard de l'usager vers la paroi murale sur laquelle est rapporté l'appareillage électrique. Ainsi, lorsque l'appareillage électrique est installé dans une pièce, l'avant désigne le côté tourné vers l'intérieur de la pièce et l'arrière désigne le côté tourné à l'opposé, vers l'extérieur de la pièce.

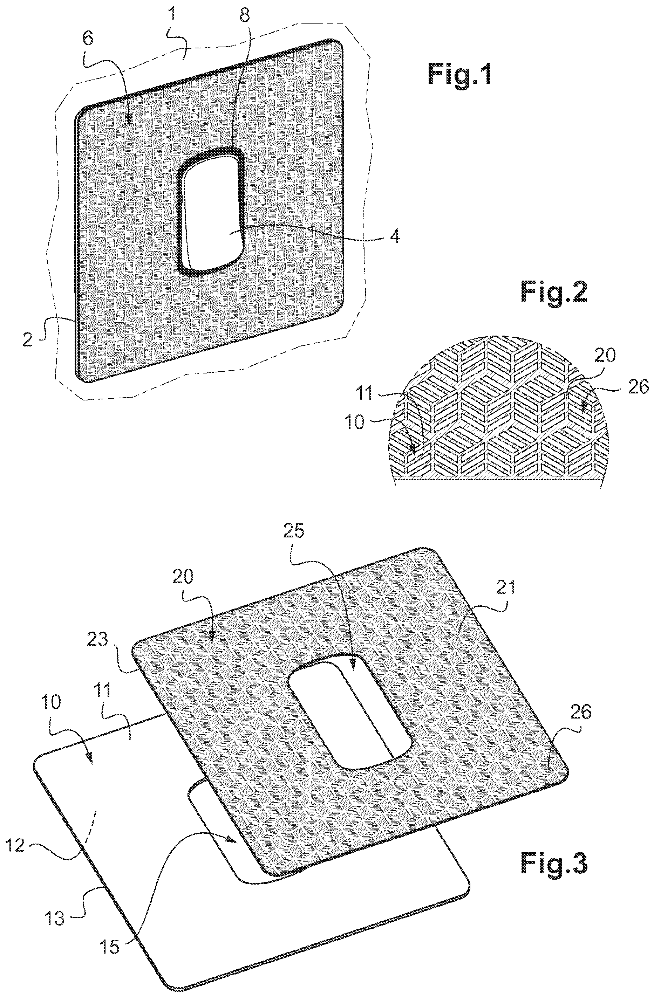

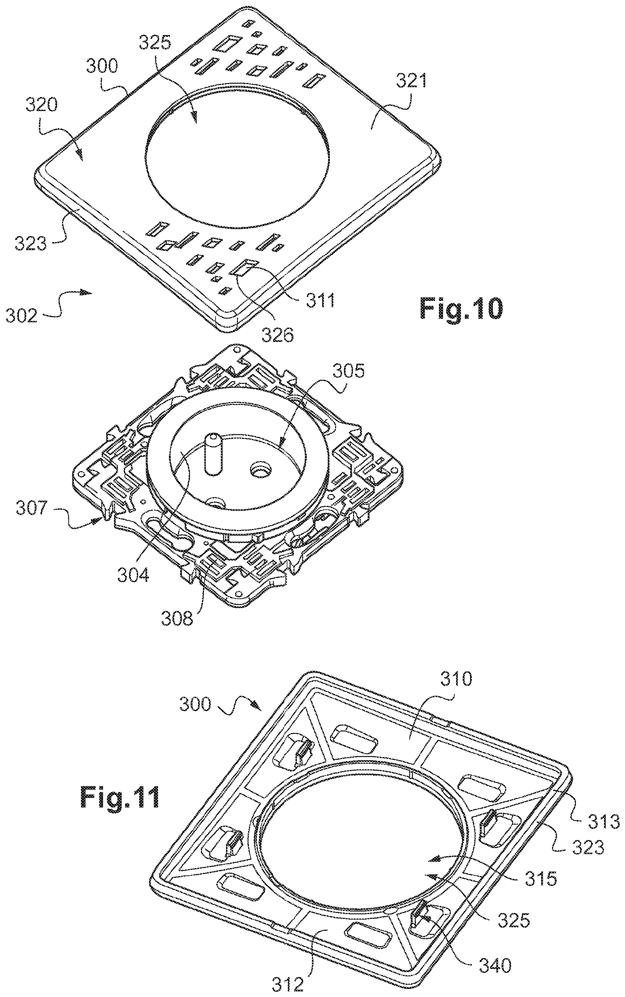

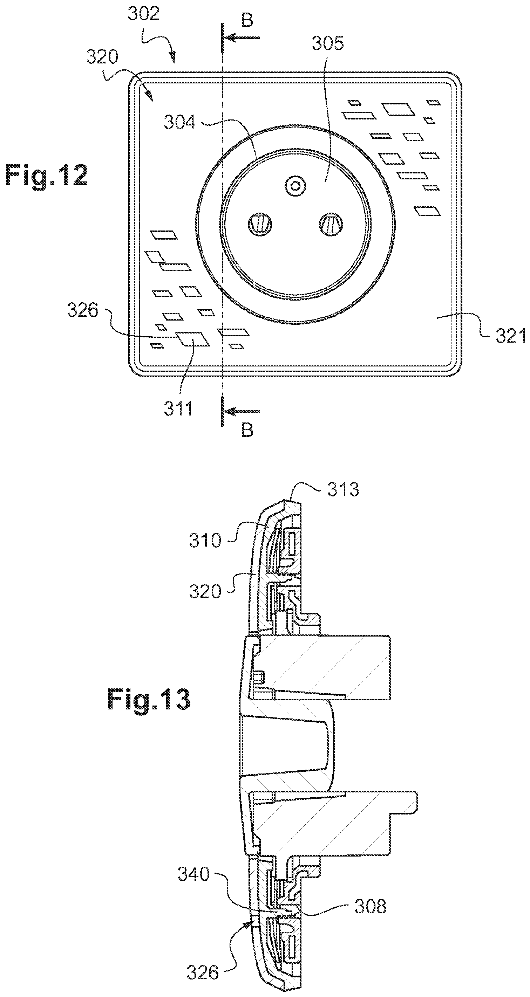

Les figures 1, 7, 8, 10 et 12 montrent un appareillage électrique 2, 202, 302, ici un interrupteur (pour les figures 1, 7 et 8) ou une prise électrique (pour les figures 10 et 12), monté dans une paroi 1.

Un tel appareillage électrique 2, 202, 302 comprend un mécanisme d'appareillage 205, 305 logé dans un support d'appareillage 207, 307 et une plaque d'habillage 6, 100, 200, 300, généralement montée sur le support d'appareillage 307 ou, en variante, sur le mécanisme d'appareillage 205.

Dans l'exemple décrit en figure 1, le support d'appareillage est encastré dans la paroi et n'est donc pas visible sur cette figure. Précisément, le support d'appareillage est reçu dans une boîte d'encastrement (non représentée) montée dans un évidement de la paroi 1.

Le mécanisme d'appareillage 205, 305 comprend une partie fonctionnelle 4, 204, 304 traversant un passage 8 formé dans la plaque d'habillage 6, 100, 200, 300 comme expliqué plus bas.

Dans le cas des figures 1 à 9, la partie fonctionnelle est un doigt de commande 4, 204 reçu dans un évidement 8 (ici central) de la plaque d'habillage 6, 200 formant passage pour ce doigt de commande 4, 204.

Le doigt de commande 4, 204 est manœuvrable (par l'utilisateur) entre au moins deux positions afin de commander une fonctionnalité particulière mise en œuvre par le mécanisme d'appareillage. Dans le cas décrit ici où l'appareillage électrique 2 est un interrupteur, le doigt de commande 4, 204 est manœuvrable entre deux positions de manière à mettre en contact ou hors contact un contact mobile et un contact fixe du mécanisme d'appareillage 205.

Dans l'exemple décrit ici, le doigt de commande 4, 204 est manœuvrable (par exemple basculant) entre deux positions stables. En variante, le doigt de commande peut être manœuvrable entre une position stable et une position enfoncée prise sous l'effet d'une contrainte exercée par l'utilisateur (bouton poussoir).

Dans le cas non couvert par les revendications, mais utile à la compréhension de l'invention, des figures 10 à 13, la partie fonctionnelle est un puits de réception 304 adapté à recevoir une fiche électrique destinée à coopérer avec la prise électrique 302.

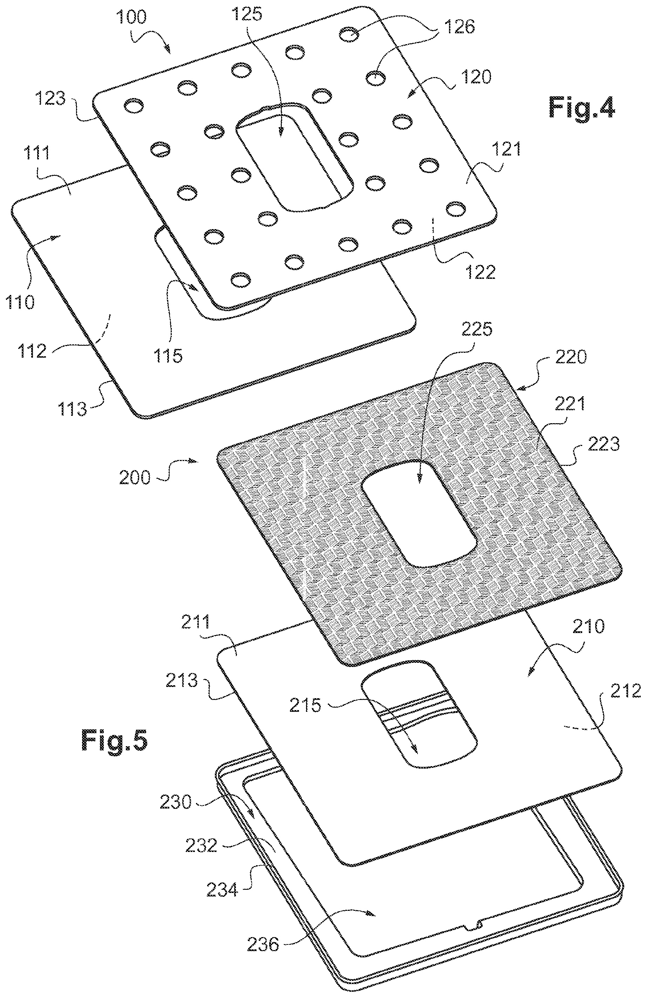

On décrit à présent une plaque d'habillage conforme à l'invention, telle que la plaque d'habillage 6 (visible sur les figures 1 à 3), la plaque d'habillage 100 non couverte par les revendications représentée en figure 4, ou la plaque d'habillage 200 conforme à l'invention visible sur les figures 5 à 9, ou encore la plaque d'habillage 300 non couverte par les revendications visible sur les figures 10 à 13.

Une telle plaque d'habillage 6, 100, 200, 300 comprend une plaque arrière 10, 110, 210, 310 et une pièce ajourée 20, 120, 220, 320.

La plaque arrière 10, 110, 210, 310 comporte une face avant 11, 111, 211, 311, une face arrière 12, 112, 212, 312 et un bord périphérique 13, 113, 213, 313. La plaque arrière 10, 110, 210, 310 a ici une forme générale rectangulaire.

La plaque arrière 10, 110, 210, 310 est par exemple réalisée en métal ; en variante, la plaque arrière 10, 110, 210, 310 peut être réalisée en bois ou en matière plastique.

La pièce ajourée 20, 120, 220, 320 présente elle aussi des dimensions extérieures ayant la forme générale d'une plaque (ici rectangulaire) et présente ainsi une face avant 21, 121, 221, 321, une face arrière 122 et un bord périphérique 23, 123, 223, 323.

La pièce ajourée 20, 120, 220, 320 peut elle aussi être réalisée en métal, en bois ou en matière plastique.

La plaque arrière 10, 110, 210, 310 et la pièce ajourée 20, 120, 220, 320 sont superposées afin de former la plaque d'habillage 6, 100, 200, 300. Autrement dit, la pièce ajourée 20, 120, 220, 320 (précisément la face arrière 122 de la pièce ajourée 20, 120, 220, 320) s'étend (autrement dit, est plaquée) au contact de la face avant 11, 111, 211, 311 de la plaque arrière 10, 110, 210, 310.

La plaque arrière 10, 110, 210, 310 comporte un évidement traversant 15, 115, 215, 315 (ici de forme oblongue dans le cas des figures 1 à 9 et de forme circulaire dans le cas des figures 10 à 13) dimensionné de manière à permettre le passage de l'élément fonctionnel précité (ici le doigt de commande 4, 204 ou le puis de réception 304) de l'appareillage électrique 2, 202, 302 équipé de la plaque d'habillage 6, 100, 200, 300.

De même, la pièce ajourée 20, 120, 220, 320 comporte un évidement traversant 25, 125, 225, 325 (ici de forme oblongue dans le cas des figures 1 à 9 et de forme circulaire dans le cas des figures 10 à 13) dimensionné de manière à permettre le passage du même élément fonctionnel (ici le doigt de commande 4, 204 ou le puis de réception 304) de l'appareillage électrique 2, 202, 302 équipé de la plaque d'habillage 6, 100, 200.

L'évidement traversant (ou passage) 15, 115, 215, 315 formé dans la plaque arrière 10, 110, 210, 310 et l'évidement traversant (ou passage) 25, 125, 225, 325 formé dans la pièce ajourée 20, 120, 220, 320 se superposent au moins partiellement de manière à délimiter ensemble un passage 8 pour l'élément fonctionnel (ici le doigt de commande 4, 204 ou le puits de réception 304) à travers la plaque d'habillage 6, 100, 200, 300. Dans les exemples décrits, l'évidement traversant 15, 115, 215, 315 formé dans la plaque arrière 10, 110, 210, 310 et l'évidement traversant 25, 125, 225, 325 formé dans la pièce ajourée 20, 120, 220, 320 se superposent exactement, c'est-à-dire que (dans la plaque d'habillage 6, 100, 200, 300 assemblée) les bords de l'évidement traversant 15, 115, 215, 315 formé dans la plaque arrière 10, 110, 210, 310 sont situés au droit des bords de l'évidement traversant 25, 125, 225, 325 formé dans la pièce ajourée 20, 120, 220, 320.

Comme bien visible sur les figures, on prévoit ici en outre que la forme et les dimensions extérieures de la plaque arrière 10, 110, 210, 320 correspondent à la forme et aux dimensions extérieures de la pièce ajourée 20, 120, 220, 320 ; le bord périphérique 23, 123, 223, 323 de la pièce ajourée 20, 120, 220, 320 est ainsi situé, sur une partie au moins de la périphérie de la pièce ajourée 20, 120, 220, 320 (ici sur l'ensemble de la périphérie de la pièce ajourée 20, 120, 220, 310) au droit (ou autrement dit, dans le prolongement) du bord périphérique 13, 113, 213, 313 de la plaque arrière 10, 110, 210, 310.

Comme visible sur les figures 3, 4 et 5, la face avant 11, 111, 211, 311 de la plaque arrière 10, 110, 210, 310 est plane et ne présente ici aucune aspérité en dehors de l'évidement traversant 15, 115, 215, 315. Autrement dit, l'évidement traversant 15, 115, 215, 315 est ici l'unique évidement formé sur la surface de la face avant 11, 111, 211, 311 délimitée par le bord périphérique 13, 113, 213, 313.

La pièce ajourée 20, 120, 220, 320 présente quant à elle au moins une ouverture, ici une pluralité d'ouvertures 26, 126, 326 réparties sur une partie au moins de sa surface, et au travers de laquelle (ici, au travers de chacune desquelles) la plaque arrière 10, 110, 210, 310 (précisément ici la face avant 11, 111, 211, 311 de la plaque arrière 10, 110, 210, 310) est visible.

Ces ouvertures 26, 126, 326 sont ici des ouvertures traversantes formées dans l'épaisseur de la pièce ajourée 20, 120, 220, 320.

On note ici que la pièce ajourée 220 du mode de réalisation de la figure 5 est identique à la pièce ajourée 20 du mode de réalisation des figures 1 à 3 et que l'on peut donc se référer à la figure 2, comme décrit ci-dessous, quant au détail de construction de la pièce ajourée 220.

Dans le plan principal d'extension de la pièce ajourée 20, 120, 220, 320, ces ouvertures 26, 126, 326 présentent (chacune) un diamètre inférieur au dixième du diamètre de la pièce ajourée 20, 120, 320. (On rappelle que, de manière générale, le diamètre d'un objet ou d'une ouverture est la valeur maximale de la distance séparant deux points de cet objet ou de cette ouverture.)

Ces ouvertures 26, 126, 326 sont donc petites, relativement notamment à l'évidement traversant 25, 125, 225, 325 formant passage pour l'élément fonctionnel (ici le doigt de commande 4, 204 ou le puits de réception 304). Cet évidement traversant (ou passage) 25, 125, 225, 325 présente en effet typiquement un diamètre compris entre un dixième du diamètre de la pièce ajourée 20, 120, 220, 320 et la moitié du diamètre de la pièce ajourée 20, 120, 220, 320.

Dans le mode de réalisation présenté sur les figures 1 à 3, ainsi que dans le mode de réalisation des figures 5 à 9, la pièce ajourée 20, 220 est une grille, ici une grille métallique.

Comme bien visible sur la figure 2 (qui représente une vue de détail de la plaque d'habillage 6, en coupe dans un plan parallèle au plan principal d'extension de la grille 20 et passant par celle-ci), cette grille 20, 220 est formée de motifs grillagés (ici périodiques) au sein desquels sont définies les ouvertures 26 susmentionnées.

Comme bien visible sur les figures 1, 3, 5, 7 et 9, ces ouvertures 26 sont ici de très petites dimensions par rapport aux dimensions de la pièce ajourée 20, 220 (et donc de la plaque d'habillage 6, 200). Dans cet exemple de réalisation, le diamètre des ouvertures 26 est en effet inférieur au dixième du diamètre de l'évidement traversant 25, 225 formé dans la pièce ajourée 20, 220 pour le passage de l'élément fonctionnel 4 du mécanisme d'appareillage.

La pièce ajourée 20, 220 comprend donc un grand nombre d'ouvertures 26 (typiquement plus de cent telles ouvertures 26, ici plus de mille telles ouvertures 26), réparties ici sur l'ensemble de la surface de la pièce ajourée 20, 220.

Dans le mode de réalisation non couvert par les revendications, mais utile à la compréhension de l'invention, présenté sur la figure 4, la pièce ajourée 120 est une plaque qui comporte une pluralité d'ouvertures (ici circulaires) 126 identiques. Ces ouvertures 126 ont un diamètre compris entre un dixième et un quart du diamètre de l'évidement traversant 125 formé dans la pièce ajourée 120. La pièce ajourée 120 comprend un nombre de telles ouvertures 126 compris entre dix et cent.

Dans le mode de réalisation non couvert par les revendications, mais utile à la compréhension de l'invention, des figures 10 à 13, la pièce ajourée 320 est une plaque qui comporte une pluralité d'ouvertures 326 (ayant chacune la forme d'un parallélogramme dans l'exemple décrit), ici de différentes tailles.

Selon une variante envisageable, la pièce ajourée pourrait comprendre une seule ouverture, formée par exemple d'éléments (de forme et de diamètre variables) reliés les uns aux autres de sorte que l'ouverture s'étend au droit d'une partie substantielle de la plaque arrière, en laissant ainsi visible la partie correspondante de la face avant de la plaque arrière. Cette ouverture peut éventuellement avoir la forme d'un dessin ou d'un motif, par exemple un motif floral.

Dans le mode de réalisation de la figure 5, la plaque d'habillage 200 comprend en outre une sous-plaque 230. Cette sous-plaque 230 comporte un cadre plat 232, ici de forme extérieure généralement carrée, et un rebord périphérique 234 s'étendant vers l'avant à partir du bord périphérique du cadre plat 232 (ici sur toute la périphérie du cadre plat 232).

Le cadre plat 232 définit une ouverture centrale 236 (le cadre plat 232 entourant ici cette ouverture centrale 236 sur toute sa périphérie) de manière à permettre notamment le passage de la partie fonctionnelle (ici le doigt 4) de l'appareillage électrique.

Les dimensions extérieures de la sous-plaque 230 (et notamment du cadre plat 232), et donc du rebord périphérique 234, sont telles que le rebord périphérique 234 entoure la plaque arrière 210 (et la pièce ajourée 220 assemblée à la plaque arrière 210) lorsque la plaque arrière 210 (précisément la face arrière 212 de la plaque arrière 210) est montée au contact du cadre plat 232.

Précisément, le rebord périphérique 234 et le cadre plat 232 définissent un logement dimensionné pour accueillir l'ensemble formé par la plaque arrière 210 et la pièce ajourée 220.

Le rebord périphérique 234 s'étend ici en outre vers l'avant de manière à ce que le bord avant (bord libre) du rebord périphérique 234 affleure (voire dépasse de) la face avant 221 de la pièce ajourée 220 lorsque la sous-plaque 230, la plaque arrière 210 et la pièce ajourée 220 sont assemblées (la face arrière de la pièce ajourée 220 étant au contact de la face avant 211 de la plaque arrière 210 et la face arrière 212 de la plaque arrière 210 étant au contact du cadre plat 232).

Le rebord périphérique 234 forme ainsi une paroi autour de la plaque arrière 210 et de la pièce ajourée 220, intéressante en particulier pour protéger le bord périphérique 223 de la pièce ajourée 220.

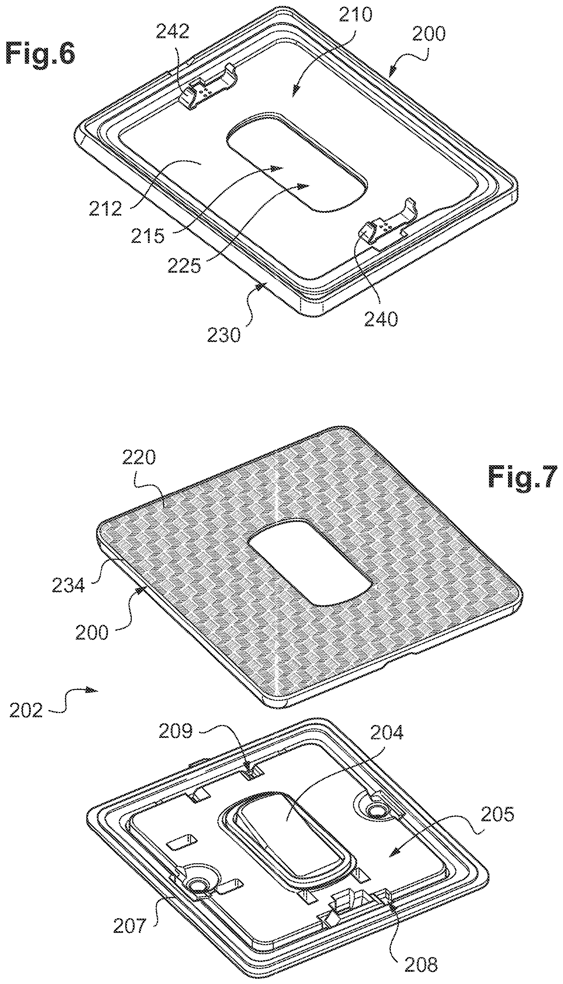

Comme visible en particulier sur les figures 6, 9, 11 et 13, la plaque arrière 210, 310 présente (au niveau de sa face arrière 212, 312) des moyens de fixation 240, 242, 340 de la plaque d'habillage 200, 300 sur l'appareillage électrique 202, 302, par exemple des moyens de fixation 240, 242 sur le mécanisme d'appareillage 205 ou des moyens de fixation 340 sur le support d'appareillage 307.

Dans le mode de réalisation des figures 5 à 9, ces moyens de fixation sont des griffes 240, 242 portées par la face arrière 212 de la plaque arrière 210.

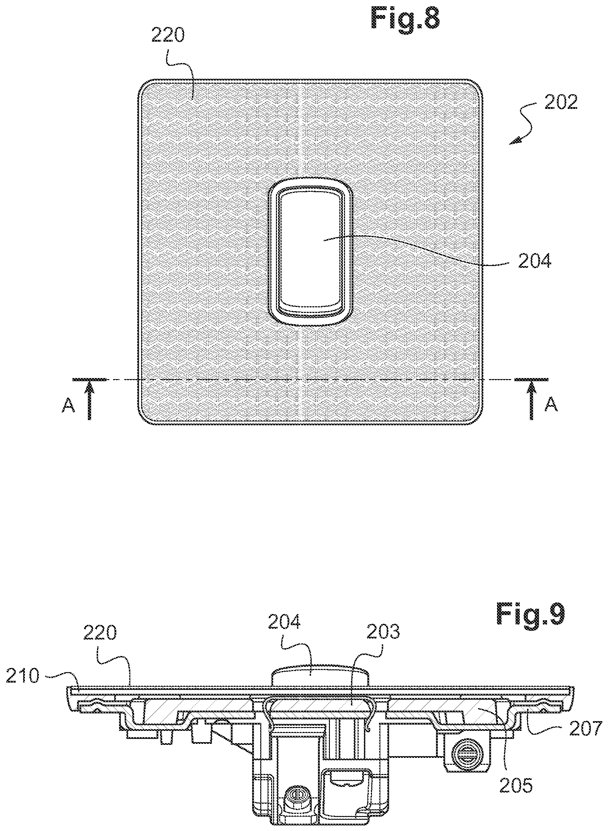

Les moyens de fixations (ici les griffes de 240, 242) sont par exemple reçus dans des évidements correspondants 208, 209 du mécanisme d'appareillage 205 de manière à coopérer avec une partie 203 du mécanisme d'appareillage 205 prévue à cet effet (comme bien visible en figure 9) et de retenir ainsi la plaque de finition 200 sur l'appareillage électrique 202.

Dans le mode de réalisation non couvert par les revendications, mais utile à la compréhension de l'invention, des figures 10 à 13, les moyens de fixation comprennent au moins une languette élastique 340 (ici quatre telles languettes élastiques) conçue pour être reçues dans un évidement correspondant 308 formé dans le support d'appareillage 307 jusqu'à s'encliqueter sur le support d'appareillage 307 de manière à retenir la plaque de finition 200 sur l'appareillage électrique 302. La (ou les) languettes élastiques 340 est (sont) par exemple réalisée(s) par moulage à partir de la face arrière 312 de la plaque arrière 310.

On décrit à présent les étapes possibles d'un procédé de fabrication d'une plaque d'habillage, par exemple une plaque d'habillage 6, 100, 200, 300 telle que décrite ci-dessus.

Un tel procédé comprend une étape de fabrication d'une plaque arrière telle que la plaque arrière 10, 110, 210, 310 décrite plus haut. Comme déjà indiqué, une telle plaque arrière 10, 110, 210, 310 délimite un passage 15, 115, 215, 315 pour une partie fonctionnelle (par exemple un doigt de commande 4, 204 ou un puits de réception 304) d'un appareillage électrique 2, 202, 302.

Lorsque la plaque arrière 10, 110, 210, 310 est réalisée en métal, l'étape de fabrication de la plaque arrière 10, 110, 210, 310 peut notamment comprendre une sous-étape de découpe de la plaque arrière 10, 110, 210, 310 dans une feuille de métal. En variante, notamment lorsque la plaque arrière 10, 110, 210, 310 est réalisée en matière plastique, l'étape de fabrication de la plaque arrière 10, 110, 210, 310 peut comprendre une sous-étape de formation de la plaque arrière 10, 110, 210, 310 dans un moule, par exemple par injection. La plaque arrière 10, 110, 210, 310 peut par exemple être moulée dans un alliage de métal, tel que le zamak.

L'étape de fabrication de la plaque arrière 10, 110, 210, 310 peut également inclure une sous-étape de traitement chimique de la plaque arrière 10, 110, 210, 310 (ou en variante de la feuille de métal, avant découpe). Un tel traitement chimique est par exemple un traitement de surface ; un tel traitement de surface peut être appliqué à l'ensemble de la plaque arrière 10, 110, 210, 310 (voire à l'ensemble de la feuille de métal avant découpe), ou à une partie seulement de la plaque arrière, par exemple à la face avant 11, 111, 211, 311 de la plaque arrière 10, 110, 210, 310.

Ce traitement chimique peut être une anodisation (en particulier lorsque la plaque arrière 10, 110, 210, 310 est réalisée en aluminium) ou un dépôt physique en phase vapeur (ou PVD pour *"Physical Vapor Deposition*"). Un tel traitement peut permettre de modifier l'état de surface de la plaque arrière 10, 110, 210, 310 (et en particulier de la face avant 11, 111, 211, 311 de la plaque arrière 10, 110, 210, 310) dans un but de protection de la surface concernée ou dans un but esthétique (éventuellement pour donner une certaine couleur à la surface concernée).

L'étape de fabrication de la plaque arrière 10, 110, 210, 310 peut également inclure une sous-étape de peinture ou d'impression d'un décor sur la plaque arrière 10, 110, 210, 310, par exemple sur la face avant 11, 111, 211, 311 de la plaque arrière 10, 110, 210, 310.

Le procédé de fabrication de la plaque d'habillage 6, 100, 200, 300 comprend également une étape de fabrication d'une pièce ajourée telle que la pièce ajourée 20, 120, 220, 320 décrite plus haut. Comme déjà indiqué, une telle pièce ajourée 20, 120, 220, 320 délimite un passage 25, 125, 225, 325 pour la partie fonctionnelle de l'appareillage électrique. Une telle pièce ajourée 20, 120, 220, 320 présente par ailleurs une pluralité d'ouvertures 26, 126, 326 réparties sur une portion au moins de sa surface, comme expliqué plus haut.

Selon une première possibilité, l'étape de fabrication de la pièce ajourée 120, 320 comprend une sous-étape de formation de la pièce ajourée 120, 320 dans un moule, par exemple par injection. Les ouvertures 126, 326 peuvent alors être formées par une conception adaptée du moule.

Selon une seconde possibilité, l'étape de fabrication de la pièce ajourée 120, 320 comprend une sous-étape de découpe de la pièce ajourée 120, 320 dans une feuille de matériau (par exemple une feuille de métal). Les ouvertures 126, 326 peuvent alors éventuellement être formées lors de cette sous-étape de découpe.

Selon cette seconde possibilité (comme d'ailleurs dans le cas de la première possibilité), les ouvertures 126, 326 peuvent en variante être réalisées (par exemple par perçage) lors d'une sous-étape dédiée, postérieure à la sous-étape de formation ou de découpe précitée.

Selon une troisième possibilité, adaptée en particulier au cas où la pièce ajourée est une grille 20, 220 telle que représentée sur les figures 1 à 3 et sur les figures 5 à 9, la pièce ajourée (grille 20, 220) peut être réalisée par attaque chimique : l'étape de fabrication de la pièce ajourée (grille 20, 220) peut alors comprendre une sous-étape de dépôt d'un masque partiel (*i.e.* au niveau seulement des parties destinées à former le motif grillagé) sur une plaque métallique et une sous-étape d'immersion de la plaque métallique (pourvue du masque partiel) dans un bain d'acide.

Les parties de la plaque métallique non protégées par le masque partiel seront attaquées jusqu'à perforer la plaque métallique à ces endroits pour ainsi obtenir la grille 20, 220.

Selon une quatrième possibilité adaptée en particulier elle aussi au cas où la pièce ajourée est une grille 20, 220 telle que représentée sur les figures 1 à 3 et 5 à 9, la pièce ajourée (grille 20, 220) peut être réalisée par électrodéposition : l'étape de fabrication de la pièce ajourée (grille 20, 220) peut alors comprendre une sous-étape de dépôt d'un masque partiel (*i.e.* au niveau seulement des parties destinées à définir les ouvertures 26) sur un plateau support (généralement métallique) et une sous-étape d'immersion du plateau support (pourvu du masque partiel) dans un bain électrolytique (par exemple de nickel). L'électrolyte (ici le nickel) se dépose ainsi sur les zones du plateau support non recouvertes par le masque partiel et croît jusqu'à former une grille 20, 220 suffisamment rigide pour être détachée du plateau support.

Le procédé de fabrication de la plaque d'habillage 6, 100, 200, 300 comprend enfin une étape d'assemblage de la pièce ajourée 20, 120, 220, 320 sur la plaque arrière 10, 110, 210, 310.

Cette étape est réalisée de manière à superposer au moins partiellement le passage 25, 125, 225, 325 de la pièce ajourée 20, 120, 220, 320 et le passage 15, 115, 215, 315 de la plaque arrière 10, 110, 210, 310, afin de délimiter un passage 8 à travers la plaque d'habillage 6, 100, 200, 300 pour la partie fonctionnelle précitée (ici le doigt de commande 4, 204 ou le puits de réception 304). L'étape d'assemblage permet également de positionner les ouvertures 26, 126, 326 de la pièce ajourée 20, 120, 220, 320 au-dessus et en regard de la plaque arrière 10, 110, 210, 310 (précisément de la face avant 11, 111, 211, 311 de la plaque arrière 10, 110, 210, 310).

Selon une possibilité de réalisation, l'étape d'assemblage comprend une sous-étape de dépôt d'un vernis sur une partie au moins de la plaque d'habillage 6, 100, 200, 300 et une sous-étape de cuisson du vernis de manière à permettre la liaison de la plaque arrière 10, 110, 210, 310 et de la pièce ajourée 20, 120, 220, 320, ainsi que la protection de la plaque d'habillage 6, 100, 200, 300. Après cuisson, le vernis forme en effet un film (qui recouvre par exemple l'ensemble de la face avant de la plaque d'habillage 6, 100, 200, 300) ; un tel film protège la plaque d'habillage 6, 100, 200, 300, facilite son nettoyage et réalise en outre une isolation électrique.

La sous-étape de dépôt du vernis peut être réalisée sur la plaque arrière 10, 110, 210, 310 et/ou sur la pièce ajourée 20, 120, 220, 320, avant mise en contact de la plaque arrière 10, 110, 210, 310 et de la pièce ajourée 20, 120, 220, 320. Dans ce cas, après dépôt du vernis, la pièce ajourée 20, 120, 220, 320 est placée sur la plaque arrière 10, 110, 210, 310 (la face arrière 122 de la pièce ajourée 20, 120, 220, 320 étant mise au contact de la face avant 11, 111, 211, 311 de la plaque arrière 10, 110, 210, 310), puis on procède à la cuisson du vernis.

En variante, la plaque arrière 10, 110, 210, 310 et la pièce ajourée 20, 120, 220, 320 peuvent être d'abord réunies (la pièce ajourée 20, 120, 220, 320 étant déposée sur la plaque arrière 10, 110, 210, 310) ; on procède alors au dépôt du vernis sur l'ensemble formé par la plaque arrière 10, 110, 210, 310 et la pièce ajourée 20, 120, 220, 320, puis à la cuisson du vernis.

Dans les deux cas, on peut prévoir des moyens de retenue temporaire de la pièce ajourée 20, 120, 220, 320 sur la plaque arrière 10, 110, 210, 310 pour maintenir la pièce ajourée 20, 120, 220, 320 sur la plaque arrière 10, 110, 210, 310 avant cuisson du vernis.

D'autres procédés d'assemblage peuvent être utilisés en variante. Par exemple, lorsque les matériaux formant respectivement la plaque arrière 10, 110, 210, 310 et la pièce ajourée 20, 120, 220, 320 le permettent, la plaque arrière 10, 110, 210, 310 et la pièce ajourée 20, 120, 220, 320 peuvent être assemblées par soudage.

## Revendications

1. Plaque d'habillage (6 ; 200) formée par la superposition d'une plaque arrière (10 ; 210) et d'une pièce ajourée (20 ; 220) qui délimitent ensemble un passage (8) pour une partie fonctionnelle (4 ; 204) d'un appareillage électrique (2 ; 202),
la pièce ajourée (20 ; 220) présente une pluralité d'ouvertures (26) réparties sur une partie au moins de sa surface et au travers de chacune desquelles la plaque arrière (10 ; 210) est visible, et
**caractérisée en ce que** la pièce ajourée (20 ; 220) est une grille formée de motifs grillagés au sein desquels sont définies les ouvertures (26).

2. Plaque d'habillage selon la revendication 1, dans laquelle la pièce ajourée (20 ; 220) présente au moins cent ouvertures (26) réparties sur l'ensemble de la surface de la pièce ajourée (20 ; 220).

3. Appareillage électrique (2 ; 202) comprenant une plaque d'habillage (6) selon l'une des revendications 1 à 2.

4. Appareillage électrique (2) selon la revendication 3, dans lequel ladite partie fonctionnelle est un doigt de commande (4 ; 204) s'étendant dans ledit passage (8).

5. Procédé de fabrication d'une plaque d'habillage (6 ; 200), qui comprend :
- une étape de fabrication d'une plaque arrière (10 ; 210) délimitant un passage (15 ; 215) pour une partie fonctionnelle (4 ; 204) d'un appareillage électrique (2 ; 202) ;
- une étape de fabrication d'une pièce ajourée (20 ; 220) délimitant un passage (25 ; 225) pour ladite partie fonctionnelle (4 ; 204) et présentant une pluralité d'ouvertures (26) réparties sur une partie au moins de sa surface, et
- une étape d'assemblage de la pièce ajourée (20 ; 220) sur la plaque arrière (10 ; 210), de telle sorte que le passage (25 ; 225) de la pièce ajourée (20 ; 220) et le passage (15 ; 215) de la plaque arrière (10 ; 210) se superposent au moins partiellement et que les ouvertures (26) de la pièce ajourée (20 ; 220) se positionnent au-dessus et en regard de la plaque arrière 10 ; 210),
**caractérise en ce que** la pièce ajourée (20 ; 220) est une grille formée de motifs grillagés au sein desquels sont définies les ouvertures (26).

6. Procédé de fabrication selon la revendication 5, dans lequel l'étape de fabrication de la pièce ajourée (20 ; 220) comprend une sous-étape de dépôt d'un masque partiel sur une plaque métallique et une sous-étape d'immersion de la plaque métallique dans un bain d'acide.

7. Procédé de fabrication selon la revendication 5, dans lequel l'étape de fabrication de la pièce ajourée (20 ; 220) comprend une sous-étape de dépôt d'un masque partiel sur un plateau support et une sous-étape d'immersion du plateau support dans un bain électrolytique.

8. Procédé de fabrication selon l'une des revendications 5 à 7, dans lequel l'étape d'assemblage comprend une sous-étape de dépôt d'un vernis sur une partie au moins de la plaque d'habillage (6 ; 200) et une sous-étape de cuisson du vernis.

9. Procédé de fabrication selon la revendication 8, dans lequel la sous-étape de dépôt du vernis est réalisée avant mise en contact de la plaque arrière (10 ; 210) et de la pièce ajourée (20 ; 220).

10. Procédé de fabrication selon la revendication 8, dans lequel la sous-étape de dépôt du vernis est réalisée après mise en contact de la plaque arrière (10 ; 210) et de la pièce ajourée (20 ; 220).

## Patentansprüche

1. Verkleidungsplatte (6; 200), die durch Übereinanderlegen einer rückseitigen Platte (10; 210) und eines mit einem Durchbruch versehenen Stücks (20; 220) gebildet ist, die zusammen einen Durchgang (8) für ein Funktionsteil (4; 204) einer elektrischen Vorrichtung (2; 202) begrenzen,
das mit einem Durchbruch versehene Stück (20; 220) weist eine Anzahl Öffnungen (26) auf, die über mindestens einen Teil seiner Oberfläche verteilt sind und durch jede derer die rückseitige Platte (10; 210) sichtbar ist, und
**dadurch gekennzeichnet, daß** das mit einem Durchbruch versehene Stück (20; 220) ein Gitter ist, das aus Gittermotiven gebildet ist, innerhalb derer die Öffnungen (26) definiert sind.

2. Verkleidungsplatte gemäß Anspruch 1, bei der das mit einem Durchbruch versehene Stück (20; 220) mindestens einhundert über die Gesamtheit der Oberfläche des mit einem Durchbruch versehenen Stücks (20;220) verteilte Öffnungen (26) aufweist.

3. Elektrische Vorrichtung (2; 202) mit einer Verkleidungsplatte (6) gemäß einem der Ansprüche 1 bis 2.

4. Elektrische Vorrichtung (2) gemäß Anspruch 3, bei der das Funktionsteil ein Steuerfinger (4; 204) ist, der sich in dem Durchgang (8) erstreckt.

5. Verfahren zur Herstellung einer Verkleidungsplatte (6; 200), das
- einen Schritt zum Herstellen einer rückseitigen Platte (10; 210), die einen Durchgang (15; 215) für ein Funktionsteil (4; 204) einer elektrischen Vorrichtung (2; 202) begrenzt,
- einen Schritt zum Herstellen eines mit einem Durchbruch versehenen Stücks (20; 220), das einen Durchgang (25; 225) für das Funktionsteil (4; 204) begrenzt und eine über mindestens einen Teil seiner Oberfläche verteilte Anzahl Öffnungen (26) aufweist, und
- einen Schritt des Zusammenbaus des mit einem Durchbruch versehenen Stücks (20; 220) auf der rückseitigen Platte (10; 210) derart, daß der Durchgang (25; 225) des mit einem Durchbruch versehenen Stücks (20; 220) und der Durchgang (15; 215) der rückseitigen Platte (10; 210) mindestens teilweise übereinander liegen und daß die Öffnungen (26) des mit einem Durchbruch versehenen Stücks (20; 220) oberhalb und gegenüber der rückseitigen Platte (10; 210) angeordnet sind,
aufweist,
**dadurch gekennzeichnet, daß** das mit einem Durchbruch versehene Stück (20; 220) ein Gitter ist, das aus Gittermotiven gebildet ist, innerhalb derer die Öffnungen (26) definiert sind.

6. Herstellungsverfahren gemäß Anspruch 5, bei dem der Schritt des Herstellens des mit einem Durchbruch versehenen Stücks (20; 220) einen Unterschritt des Auftragens einer teilweisen Maske auf eine Metallplatte und einen Unterschritt des Eintauchens der Metallplatte in ein Säurebad aufweist.

7. Herstellungsverfahren gemäß Anspruch 5, bei dem der Schritt des Herstellens des mit einem Durchbruch versehenen Stücks (20; 220) einen Unterschritt des Auftragens einer teilweisen Maske auf eine Trägerplatte und einen Unterschritt des Eintauchens der Trägerplatte in ein Elektrolytbad aufweist.

8. Herstellungsverfahren gemäß einem der Ansprüche 5 bis 7, bei dem der Schritt des Zusammenbaus einen Unterschritt des Auftragens eines Lacks auf mindestens einen Teil der Verkleidungsplatte (6; 200) und einen Schritt des Aushärtens des Lacks aufweist.

9. Herstellungsverfahren gemäß Anspruch 8, bei dem der Unterschritt des Auftragens des Lacks vor dem Zusammenbringen der rückseitigen Platte (10; 210) mit dem mit einem Durchbruch versehenen Stück (20; 220) ausgeführt wird.

10. Herstellungsverfahren gemäß Anspruch 8, bei dem der Unterschritt des Auftragens des Lacks nach dem Zusammenbringen der rückseitigen Platte (10; 210) mit dem mit einem Durchbruch versehenen Stück (20; 220) ausgeführt wird.

## Claims

1. Trim plate (6; 200) formed by the superposition of a rear plate (10; 210) and an open-worked part (20; 220) which, together, delimit a passage (8) for a functional portion (4; 204) of an electrical apparatus (2; 202),
the open-worked part (20; 220) has a plurality of openings (26) distributed over at least a part of its surface and through each of which the rear plate (10; 210) is visible, and
**characterised in that** the open-worked part (20; 220) is a grid formed of grid patterns within which the openings (26) are defined.

2. Trim plate according to claim 1, wherein the open-worked part (20; 220) has at least one hundred openings (26) distributed over the entire area of the open-worked part (20; 220).

3. Electrical apparatus (2; 202) comprising a trim plate (6) according to one of claims 1 to 2.

4. Electrical apparatus (2) according to claim 3, wherein said functional part is a control finger (4; 204) extending into said passage (8).

5. Method of manufacturing a trim plate (6; 200), which comprises:
- a step of manufacturing a rear plate (10; 210) delimiting a passage (15; 215) for a functional portion (4; 204) of an electrical apparatus (2; 202);
- a step of manufacturing an open-worked part (20; 220) delimiting a passage (25; 225) for said functional portion (4; 204) and having a plurality of openings (26) distributed over at least a portion of its area, and
- a step of assembling the open-worked part (20; 220) on the rear plate (10; 210), so that the passage (25; 225) of the open-worked part (20; 220) and the passage (15; 215) of the rear plate (10; 210) overlap at least partially and so that the openings (26) of the open-worked part (20; 220) are positioned above and facing the rear plate (10; 210),
**characterised in that** the open-worked part (20; 220) is a grid formed by grid patterns within which the openings (26) are defined.

6. Method of manufacturing according to claim 5, wherein the step of manufacturing the open-worked part (20; 220) comprises a sub-step of depositing a partial mask on a metal plate and a sub-step of immersing the metal plate in an acid bath.

7. Method of manufacturing according to claim 5, wherein the step of manufacturing the open-worked part (20; 220) comprises a sub-step of depositing a partial mask on a support plate and a sub-step of immersing the support plate in an electrolytic bath.

8. Method of manufacturing according to one of claims 5 to 7, wherein the assembling step comprises a sub-step of depositing a varnish on at least a part of the trim plate (6; 200) and a sub-step of curing the varnish.

9. Manufacturing method according to claim 8, wherein the sub-step of depositing the varnish is carried out before bringing the rear plate (10; 210) and the open-worked part (20; 220) into contact.

10. Manufacturing method according to claim 8, wherein the sub-step of depositing the varnish is carried out after bringing the rear plate (10; 210) and the open-worked part (20; 220) into contact.
